# EUROPEAN PATENT APPLICATION

(11) **EP 4 235 999 A1**
(43) Date of publication of application: **30.08.2023**
(21) Application number: 22158319.8
(22) Date of filing: 23.02.2022
(51) Int. Cl.: H02J 3/14, H02J 3/38

(54) **CONTROL SYSTEM AND METHOD FOR A RENEWABLE POWER PLANT**

(71) Applicant: Siemens Gamesa Renewable Energy A/S, 7330 Brande (DK)
(72) Inventor: Gkountaras, Aris, 22299 Hamburg (DE); Chaudhary, Abhishek, 7330 Brande (DK); Serup, Mikkel, 7330 Brande (DK)
(74) Representative: SGRE-Association

(57) **Abstract**

The invention refers to a control system for a power plant (100) supplying electrical energy to a utility grid (200), the power plant (100) comprising a wind farm (10) with at least one wind turbine (11-1, ..., 11-n) and a load system (20) with at least one load (21-1, ..., 21-m). Each load is configured to consume and transform energy provided from the wind farm or the utility grid (200) at each point of time. The control system comprises a frequency response system (1) for obtaining at least one electrical property data (E) of the utility grid (200) as input, the frequency response system (1) being further configured for a comparison of the obtained electrical property data (E) with respective reference values (Eref) and generating a control signal (S) in dependence of the comparison. Further, the control system is configured to reduce its power consumption during a recovery period of the utility grid (200), the recovery period immediately following the inertial response, where the control signal (S) comprises time-dependent setpoints (PSP20) for dynamically controlling the energy consumption of the load system (20) with a predetermined reduced energy consumption in comparison to the energy consumption prior to the inertial response in order to achieve a steady amount of energy supplied to the utility grid (200) as soon as the recovery period has started.

## Description

The present invention relates to a control system and a method for a power plant supplying electrical energy to a utility grid. The power plant comprises a wind farm with at least one wind turbine and a load system with at least one load. Each load is configured to consume and transform energy provided from the wind farm or the utility grid at each point of time.

A utility-tied wind turbine generator (WTG) transforms mechanical power of wind into electrical power which is injected into a utility grid via a generator and a power electronic converter system utilized for maximum power production. This is generally independent of the utility grid transient conditions. Such wind turbine systems can be grouped into a wind power plants (wind farms) and used for bulk power production, facing challenging grid code requirements. Therefore, control systems for wind turbine systems are required which allow an active role in the stability of the utility grid.

Conventionally, grid connected wind turbine systems are controlled in a manner to feed in a maximum available energy from the wind to the utility grid. In case of a grid frequency drop (also known as frequency event), the wind turbine systems can utilize the stored energy in their rotating mass and for a short period of time inject more power into the utility grid than the maximum available energy from the wind. This feature is known as inertial response or inertia emulation. In the period following the inertial response, the output power of the wind turbine systems is lower than the maximum available power from the wind. Thus, the wind turbine systems return to the pre-frequency event operating point. This period following the inertial response is called recovery period.

In utility grids having an average penetration of wind turbine systems, the recovery period may have a negative effect on the grid frequency which results in a second frequency dip after the initial frequency drop. In utility grids which are dominated from wind turbine systems, this subsequent frequency dip can be more severe than the initial frequency drop.

It is therefore an object of the present invention to provide a control system for a power plant supplying electrical energy to a utility grid and comprising a wind farm with at least one wind turbine, to minimize negative effects on grid frequency in case of an initial frequency event.

This object is solved by a control system according to the features of present claim 1 and a control system according to the features of present claim 11. Preferred embodiments are set out in the dependent claims.

The control system for a power plant supplying electrical energy to a utility grid according to the invention comprises a frequency response system for obtaining at least one electrical property data of the utility grid as input, the frequency response system being further configured for a comparison of the obtained electrical property data with respective reference values. Based on this comparison, a control signal is generated which can be used to control the power plant.

The power plant to be controlled by the control system comprises a wind farm with at least one wind turbine and a load system with at least one load. Each load is configured to consume and transform energy provided from the wind farm or the utility grid at each point of time, when in use. The loads as defined are not capable of producing energy and supplying it to the utility grid.

The load system is configured to reduce its power consumption during a recovery period of the utility grid. The recovery period immediately follows the inertial response, for example due to a frequency event of the utility grid. The control signal comprises time-dependent setpoints for dynamically controlling the energy consumption of the load system with a predetermined reduced energy consumption in comparison to the energy consumption prior to the inertial response in order to achieve a steady (or a predetermined) amount of energy supplied to the utility grid as soon as the recovery period has started.

The control system as described above allows to avoid any instability during the recovery period, such as a second frequency dip after an initial frequency drop.

According to a preferred embodiment of the control system, the frequency response system is configured to determine resulting power nadir and the total energy of the wind farm during the recovery period, in order to derive the time-dependent setpoints therefrom. This enables a coordinated response of the power plant to a frequency event.

According to a further preferred embodiment of the control system, the load system is configured to reduce the power consumption of a plurality of loads independently from each other. In particular, the frequency response system is configured to determine first time-dependent setpoints to control at least one of the loads of the load system according of the first characteristic curve. Furthermore, the frequency response system is configured to determine second time-dependent setpoints to control at least a further load of the load system according to a second characteristic curve which is different to the first characteristic curve. In other words, respective loads of the load system can be controlled differently from each, provided that the load system as a whole achieves a steady amount of energy supplied to the utility grid as soon as the recovery period has started.

According to a further preferred embodiment, the frequency response system is configured to provide the control signal with at least one setpoint to reduce the power consumption of the load system, in order to achieve an amount of energy supply to the utility grid which contains a buffer period during the recovery period. The buffer period is also known as dead band period and results from a requirement of a grid operator.

Alternatively or additionally, the frequency response system is configured to provide the control signal with at least one setpoint to reduce the power consumption of the load system, in order to achieve an amount of energy supplied to the utility grid which contains a given rate of recovery during the recovery period. The rate of recovery results from a requirement or demand of a grid operator.

Further alternative or additional, the frequency response system is configured to provide a control signal with at least one setpoint to reduce the power consumption of the load system, in order to achieve an amount of energy supplied to the utility grid which contains a given maximum power drop during the recovery period. The given maximum power drop results from a requirement or demand of a grid operator.

As a result, the frequency response system and the control system, respectively, can be parameterized to achieve a predefined curve of the whole power plant, where limitations like dead band period, rate of recovery and maximum power drops allowed during recovery are fixed based on grid conditions by a grid operator, such as a Transmission System Operator (TSO) or a Distribution System Operator (DSO)/Distribution Network Operator. For example, there may be a dead band period between injecting active power and recovery period which is particularly difficult for wind turbines and/or wind farms to fulfil. This allows for a coordinated control of the frequency response ensuring that an overall power plant response is inside a predefined acceptable response area.

According to a further preferred embodiment of the control system, the frequency response system monitors the consumption level of the at least one load during nominal operation and/or transient operation of the utility grid. Depending on the known consumption level of the at least one load of the load system, the control signal comprising the time-dependent setpoints for dynamically controlling the energy consumption during the recovery period of the at least one wind turbine can be determined.

According to a further preferred embodiment of the control system, the control signal is generated by the frequency response system in dependence of the comparison indicating start of the inertial response of the wind farm. This means that the control signal comprising the time dependent setpoints is only generated and used to control the load system if the comparison shows that, for example, a frequency event has been detected. The frequency is one example of the electrical property data.

According to a further preferred embodiment, the at least one load comprises at least one electrolyzer and/or at least one general load which can reduce its consumption in a controlled manner. General loads are loads which, at any time, are not able to provide energy to the utility grid.

The issues are also addressed by a control method according to the features of present claim 11.

In this method, the frequency response system at least obtains one electrical property data of the utility grid as input.

The frequency response system is subsequently comparing the obtained the electrical property data with respect to reference values and is then generating a control signal in dependence of the comparison. Frequency is one example of electrical property data.

The load system has its power reduced during a recovery period of the utility grid, where the recovery period immediately follows the inertial response.

The control signal comprises time dependent setpoints for dynamically controlling the energy consumption of the load system with a predetermined reduced energy consumption in comparison to the energy consumption prior to the inertial response in order to achieve a steady amount of energy supplied to the utility grid as soon as the recovery period has started.

Moreover, the invention refers to a computer program product with a program code which is stored in a non-transitory machine-readable carrier, for carrying out the method according to the invention or one or more preferred embodiments thereof when the program code is executed on a computer.

Embodiments of the invention are described hereinafter in an exemplary way in the following figures, wherein:
- Fig. 1: shows a frequency-time-diagram illustrating the impact of the recovery period of inertial response of wind farms in a utility grid experiencing a frequency event.
- Fig. 2: schematically shows an embodiment of a control system for a power plant comprising a wind farm and a load system and its connection to a utility grid;
- Fig. 3: schematically shows high level input and outputs of a frequency response system of the control system for a coordinated response in case of inertial response;
- Fig. 4: shows a power-time-diagram following a coordinated frequency response according to the present invention;
- Fig. 5: shows a power-time-diagram illustrating an acceptable response area in case of an inertial response of a power plant;
- Fig. 6: shows a power-time-diagram following a coordinated frequency response containing a buffer period according to a requirement of a grid operator;
- Fig. 7: shows an exemplary first embodiment of a power plant topology under the control of a control system according to the invention;
- Fig. 8: shows an exemplary second embodiment of a power plant topology under the control of a control system according to the invention;
- Fig. 9: shows an exemplary third embodiment of a power plant topology under the control of a control system according to the invention.

The normal operating condition of the utility grid is given, if the balance between power generation and load results in a constant frequency. Hence, utility grid stability consists in frequency stability which represents balancing the response of power generation (e.g. by means of large synchronous-based hydro or fossil fluid power plants or renewable power plants) to the demanding characteristics of the load on the utility grid. If the balance between power generation of one or more power plants and loads connected to a utility grid is disturbed, thereby reflecting an unexpected operating condition of the utility grid, a frequency drop occurs.

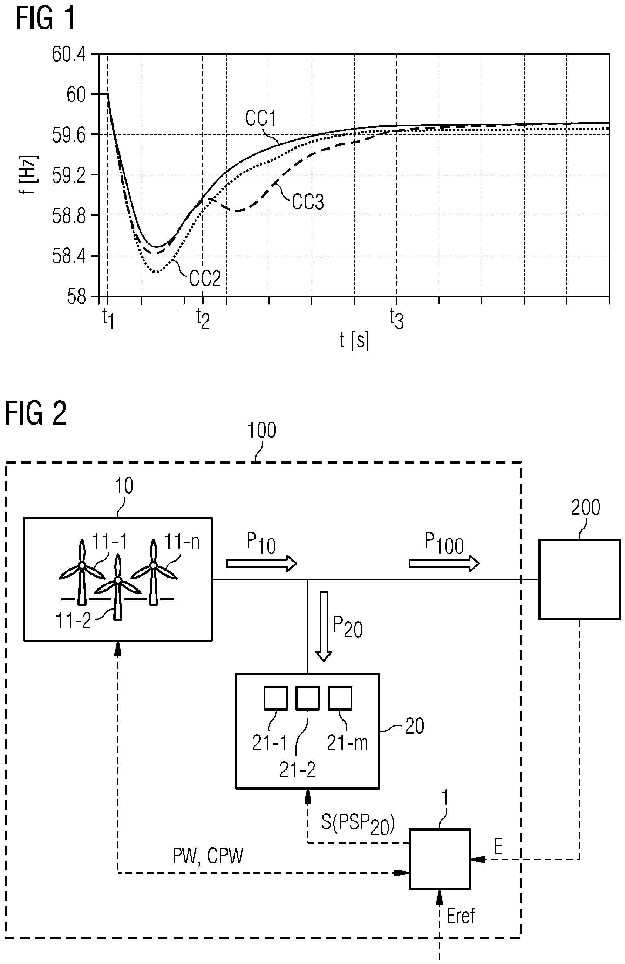

Fig. 1 illustrates a frequency-time (f-t)-diagram illustrating three different frequency curves CC1, CC2 and CC3 in case of a grid frequency drop occurring at t = t₁. In case of a grid frequency drop, starting from t = t₁ and lasting to t = t₂, a wind turbine connected to the utility grid can utilize stored energy in its rotating mass and for a short period of time and inject more power into the utility grid than the maximum available energy from the wind. This feature corresponds to the so-called inertial response. The inertial response period is followed by a recovery period (starting from t = t₂) of the wind turbine, where the output power of the wind turbine is lower than a maximum available power from the wind. Then, the wind turbine thus returns to the pre-frequency event operating point (around t = t₃).

CC1 representing a benchmark curve illustrates the frequency curve of the utility grid without a wind turbine connected to the utility grid. CC2 denotes a wind turbine connected to the utility grid, where no inertial response is executed by the wind turbine. As can be seen from Fig. 1, the frequency drop increases compared to the frequency drop of a utility grid without wind turbine (CC1). CC3 denotes a frequency curve where the wind turbine executes inertial response immediately after the frequency drop occurs at t = t₁. As can be seen from CC3, a second frequency dip occurs in the recovery period which might be more severe than the initial frequency drop at t = t₂.

To minimize this effect, the invention proposes a coordinated response from a power plant, comprising a wind farm with at least one wind turbine and a load system with at least one load to ensure an overall positive contribution of the power plant in case of a frequency drop.

Fig. 2 illustrates a schematic diagram of a control system for a power plant 100 supplying electrical energy to a utility grid 200. The power plant 100 comprises a wind farm 10 and a load system 20. The wind farm 10 comprises one or more wind turbines 11-1, ..., 11-n, where the number n corresponds to or is greater than 1 (n ≥ 1).

Each wind turbine 11-1, ..., 11-n (also known as wind turbine generator WTG) transforms mechanical power of wind into electrical power which is injected into the utility grid 200 via a respective generator (not shown) and a power electronic converter system (not shown) utilized for maximum power production. The energy and power output, respectively, of the wind farm 10 is denoted with P₁₀, i.e. P₁₀ ≥ 0W.

The load system 20 comprises one or more loads 21-1, ..., 21-m, where the number m of loads corresponds to or is greater than 1 (m ≥ 1). Each load 21-1, ..., 21-m is configured to consume and transform energy provided by the wind farm 10 or the utility grid 200 at each point of time, when in use. In no case the load(s) of the load system 20 may produce power and supply it to the utility grid 200. The energy and consumed power of the load system 20, respectively, is denoted with P₂₀, i.e. P₂₀ ≤ 0W.

For example, at least one of the loads 21-1, ..., 21-m may be an electrolyzer configured to produce hydrogen. However, any other general loads may be part of the load system 20 as well, provided they can reduce their consumption in a controlled manner.

The number n of wind turbines 11-1, ..., 11-n may correspond to the number m of loads (i.e., m = n) or may be different (i.e., m ≠ n).

A resulting power and energy, respectively, of the power plant 100 supplied to the utility grid 200 is denoted with P₁₀₀, i.e. P₁₀₀ = P₁₀ + P₂₀.

The control system further comprises a frequency response system 1 for obtaining at least one electrical property data E of the utility grid 200 as input. The frequency of the utility grid is one example of the electrical property data E. The frequency response system 1 is configured for a comparison of the obtained electrical property data E with respective reference values Eref and, based on the comparison, to generate a control signal S to control the load system 20 during the recovery period of the at least one wind turbine (11-1, ..., 11-n). The control signal S is generated if, based on the comparison of E and Eref, a frequency event has been detected. In this case inertia response of at least one of the wind turbines 11-1, ..., 11-n of the wind farm is initiated. As mentioned above, the recovery period immediately follows the inertial response of the wind farm 10.

The control signal S comprises time-dependent setpoints PSP20 for dynamically controlling the energy consumption of the load system 20 with a predetermined reduced energy consumption during the recovery period. The term "reduced energy consumption" is to be understood in comparison to the energy consumption prior to the inertial response. The reduced energy consumption of the load 20 aims to achieve a steady amount of energy supplied to the utility grid 200 as soon as the recovery period has started.

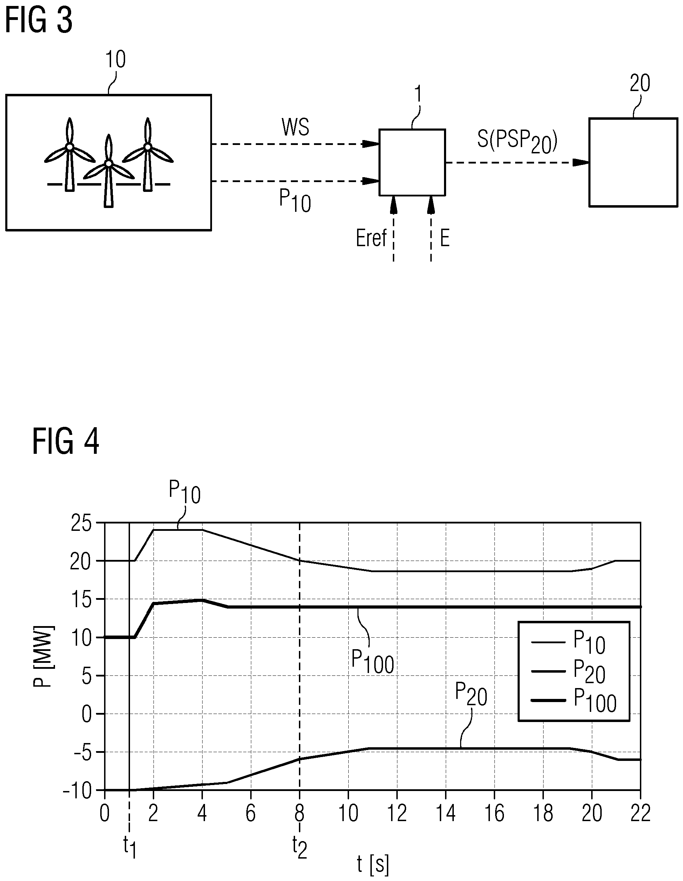

After detection of the frequency event and activation of the inertial response of one or more wind turbines 11-1, ..., 11-n of the wind farm 10 in reaction to the frequency event at t = t₁ in the power-time (P-t)-diagram of Fig. 4, the control system and its frequency response system 1, respectively, calculates the resulting power nadir and a total energy during the recovery period, starting from t = t₂, and generates the control signal S comprising the time-dependent setpoints PSP20. The control signal S comprising the time-dependent setpoints PSP20 is communicated to respective control units of the load or loads 21-1, ..., 21-m of the load system, initiating a determined reduced energy consumption of the load system 20 in total.

As can be seen from Fig. 4, reducing energy consumption of the load system 20 (P₂₀) means that the energy consumption of the load system 20 is reduced compared to the energy consumption prior to the inertial response (i.e., t < t₁).

In the example of Fig. 4, the power produced by the wind farm P₁₀ is 20 MW before the frequency event occurs, i.e. before t₁. At the same time, the load system 20 was consuming P₂₀ = - 10 MW resulting in P₁₀₀ = 10 MW of active power injected from the total power plant to the grid.

The load system 20 which is controlled with the setpoints PSP20 in the control signal S reduces energy consumption to achieve a steady amount of energy supply to the utility grid 200 P₁₀₀. Reduction of energy consumption of the load system 20 starts at t = t₁, i.e. when inertia control is activated, to ensure that, as soon as the recovery period has started (t = t2), a steady amount of energy is supplied to the utility grid 200 P₁₀₀. Thus, the control system achieves a coordinated response of the power plant 100 which supplies power P₁₀₀ to the utility grid 200.

Hence, in the present example, after activation of the inertial response at t = t₁, the produced power P₁₀ of the wind farm 10 increases temporarily up to 24 MW until, at t = t₂, the recovery period starts. From that time on the produced power P₁₀ is below the initial value of 20 MW. When the recovery period starts at t = t₂, the injected active power P₁₀₀ to the utility grid 200 amounts to P₁₀₀ = 14 MW resulting from P₁₀ = 19 MW resulting from the wind farm 10 and P₂₀ = -5 MW consumed by the load system 20 (in comparison to P₂₀ = -10 MW before the frequency event).

Fig. 3 shows a schematically diagram of high-level inputs and outputs of the control system and the frequency response system 1 for coordinated frequency response, as described above. The wind farm 10 provides wind speed WS and the power output P₁₀ of the wind turbine(s) of the wind farm 10. In addition to these values, the frequency response system 1 receives the electrical property data E, for example the utility grid frequency, and a corresponding reference value Eref. Based on this information, the frequency response system 1 generates the control signal S in dependence of the comparison of the electrical property data E and its reference value Eref. The control signal S comprising time-dependent setpoints PSP20 are used to control the load(s) 21-1, ..., 21-m of the load system 20 as soon as the recovery period has started. By means of the time-dependent setpoints PSP20, the energy consumption of the load(s) 21-1, ..., 21-m of the load system 20 is controlled with predetermined reduced energy consumption in comparison to the energy consumption prior to the inertial response in order to achieve amount of energy supplied to the utility grid 200.

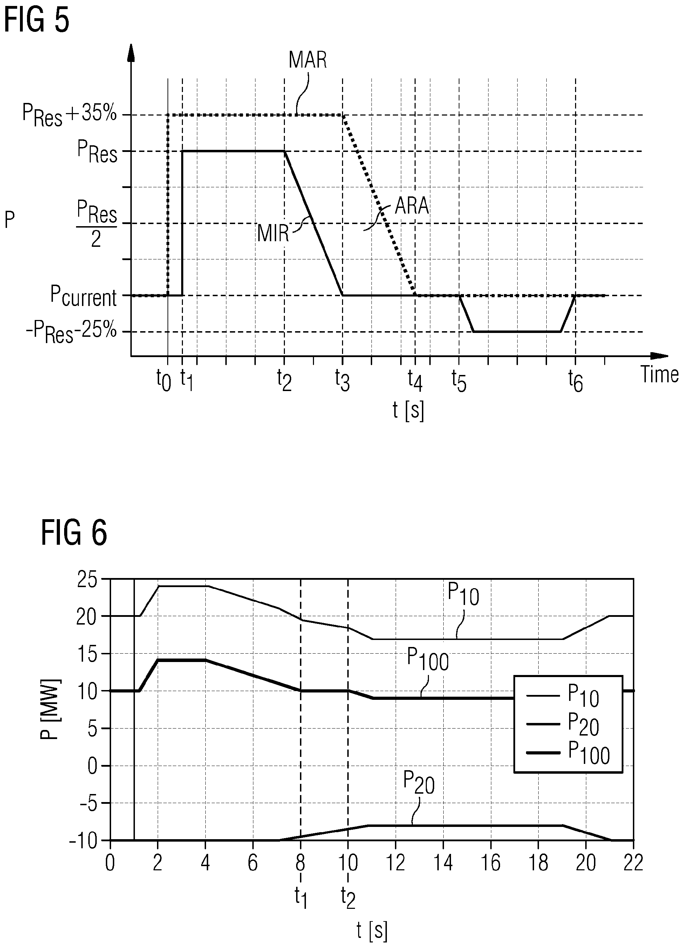

The frequency response system 1 can be parameterized to achieve a predefined curve of the whole power plant 100 which is shown in power-time(P-t)-diagram of Fig. 5. MIR denotes the minimum power-response, MAR the maximum power response, and ARA an acceptable response area over the time after occurrence of a frequency event (in Fig. 5 at t = t₀). The acceptable response area ARA is in between the curves MIR and MAR. By means of these power curves limitations, like a dead band period, a rate of recovery and maximum power drop which are allowed the recovery period and which are based on grid conditions by TSO/DSO, can be defined.

For example, a dead band period between injecting active power and the recovery period may be required, shown in Fig. 5 between t = t₃ and t = t₅. As this is particularly difficult to fulfil for wind farms, a coordinated control for frequency response is possible ensuring that the overall response of the power plant 100 is within the acceptable response area ARA.

The results of the operation of the control system and the frequency response system 1 with a predefined curves as illustrated in Fig. 5 is shown in the power-time(P-t)-diagram of Fig. 6. Again, the power outputs P10 of the wind farm, the power consumption of the load system 20 and the resulting power supplied to the utility grid are illustrated. In this example, a dead band period (also called buffer period) is required from the grid operator and therefore provided by respective controlling of the load(s) of the load system 20 in the time period between t = t₁ and t = t₂.

It is to be noted that the above described functionalities may be made with any grid connected loads that can reduce the consumption as described in the previous description.

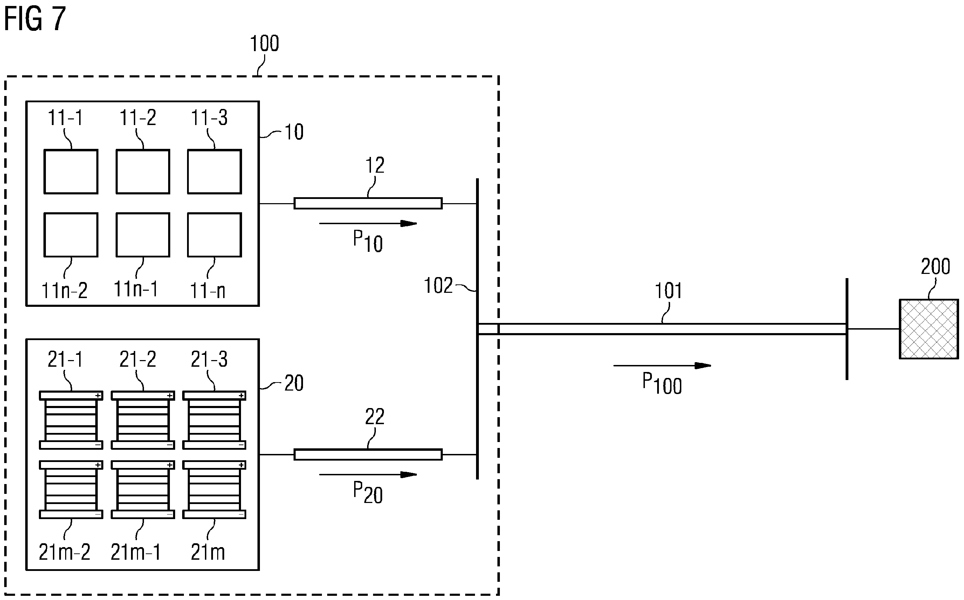

Figs. 7 to 9 schematically illustrate different power plant topologies where the described control system may be implemented.

According to Fig. 7, the wind farm 10 and its plurality of wind turbines 11-1, ..., 11-n is connected to the utility grid 200 via a wind farm power cable system 12 and an electrical transmission system 101, where the farm power cable system and the electrical transmission system 101 are electrically connected by a connection line 102. The load system 20 and its plurality of loads 21-1, ..., 21-m is connected to the transmission line 101 by means of a load power cable system 22 and the connection line 102. Respective power flows are illustrated besides the transmission lines.

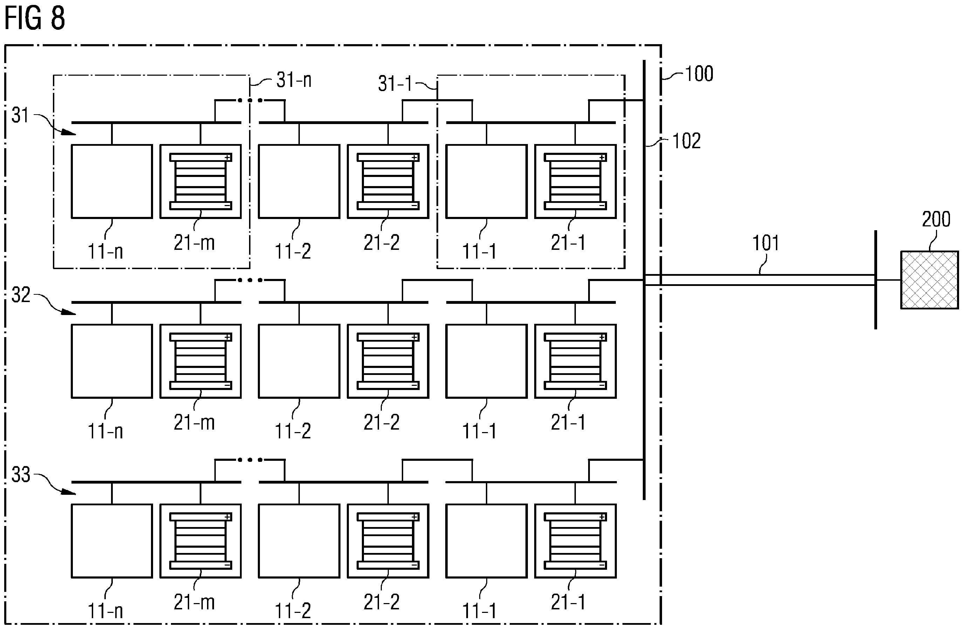

Fig. 8 shows a power plant topology, where respective single wind turbines and loads constitute a respective micro renewable hydrogen unit 31-1, ..., 31-n. The number n of micro renewable hydrogen units 31-1, ..., 31-n are series-connected to constitute a string 31. In the present example three strings 31, 32, 33 with respective renewable hydrogen units are connected in parallel to the connection line 102 which is connected to the utility grid 200 via the electrical transmission system 101.

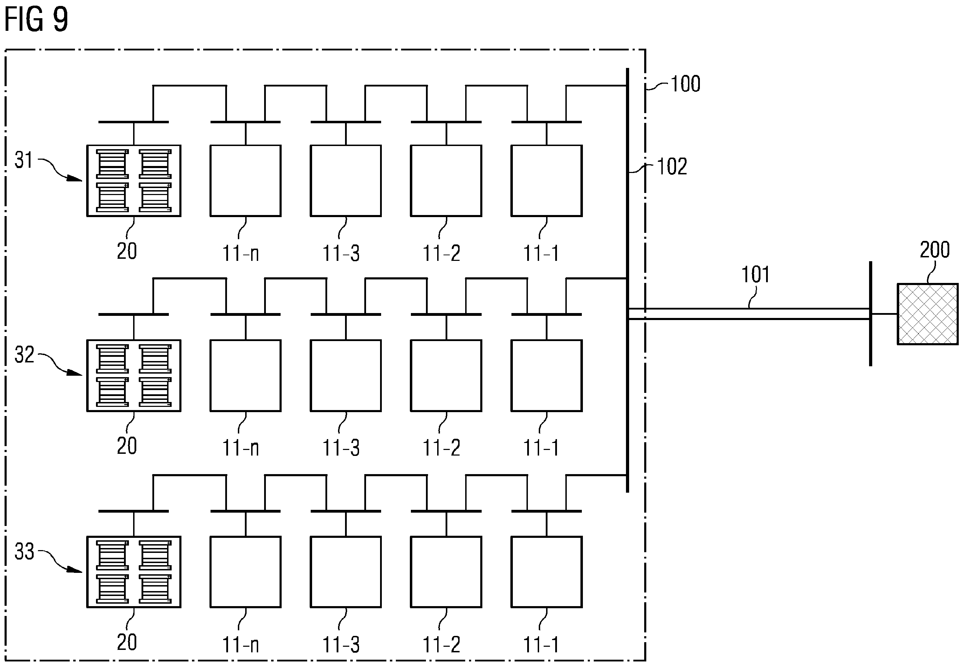

Fig. 9 shows a further power plant topology, consisting of three strings 31, 32, 33 connected in parallel to the connection line 102. The connection line 102 is connected to the utility grid 200 by the electrical transmission system 101. Each string 31, 32, 33 consists of a number n of wind turbines 11-1, ..., 11-n connected in series and a load set 20, such as an electrolyzer set, consisting of a plurality of loads (electrolyzers).

## Claims

1. A control system for a power plant (100) supplying electrical energy to a utility grid (200), the power plant (100) comprising a wind farm (10) with at least one wind turbine (11-1, ..., 11-n) and a load system (20) with at least one load (21-1, ..., 21-m), each load being configured to consume and transform energy provided from the wind farm or the utility grid (200) at each point of time, the control system comprising:
a frequency response system (1) for obtaining at least one electrical property data (E) of the utility grid (200) as input, the frequency response system (1) being further configured for a comparison of the obtained electrical property data (E) with respective reference values (Eref) and generating a control signal (S) in dependence of the comparison,
**characterized in that**
the load system (20) is configured to reduce its power consumption during a recovery period of the utility grid (200), the recovery period immediately following the inertial response, where the control signal (S) comprises time-dependent setpoints (PSP20) for dynamically controlling the energy consumption of the load system (20) with a predetermined reduced energy consumption in comparison to the energy consumption prior to the inertial response in order to achieve a steady amount of energy supplied to the utility grid (200) as soon as the recovery period has started.

2. The control system according to claim 1, wherein the frequency response system (1) is configured to determine the resulting power nadir and the total energy of the wind farm (10) during the recovery period, in order to derive the time-dependent setpoints (PSP20) therefrom.

3. The control system according to claim 1 or 2, wherein the load system (20) is configured to reduce the power consumption of a plurality of loads (21-1, ..., 21-m) independently from each other.

4. The control system according to claim 3, wherein the frequency response system (1) is configured to determine first time-dependent setpoints to control at least one of the loads (21-1, ..., 21-m) of the load system (20) according to a first characteristic curve and to determine second time-dependent setpoints to control at least a further load of the loads (21-1, ..., 21-m) of the load system (20) according to a second characteristic curve which is different to the first characteristic curve.

5. The control system according to one of the preceding claims, wherein the frequency response system (1) is configured to provide the control signal (S) with at least one setpoint to reduce the power consumption of the load system (20), in order to achieve an amount of energy supply to the utility grid (200) which contains a buffer period during the recovery period.

6. The control system according to one of the preceding claims, wherein the frequency response system (1) is configured to provide the control signal (S) with at least one setpoint to reduce the power consumption of the load system (20), in order to achieve an amount of energy supply to the utility grid (200) which contains a given rate of recovery during the recovery period.

7. The control system according to one of the preceding claims, wherein the frequency response system (1) is configured to provide the control signal (S) with at least one setpoint to reduce the power consumption of the load system (20), in order to achieve an amount of energy supply to the utility grid (200) which contains a given maximum power drop during the recovery period.

8. The control system according to one of the preceding claims, wherein the frequency response system (1) monitors the consumption level of at least one load (21-1, ..., 21-m) during nominal operation and/or transient operation of the utility grid (200).

9. The control system according to one of the preceding claims, wherein the control signal (S) is generated by the frequency response system (1) in dependence of the comparison indicating start of the inertial response of the wind farm (10) .

10. The control system according to one of the preceding claims, wherein the at least one load (21-1, ..., 21-m) comprises at least one electrolyzer and/or at least one general load which can reduce its consumption in a controlled manner.

11. A control method for a power plant system (100) supplying electrical energy to a utility grid (200), wherein
a) a frequency response system management system (1) obtains at least one electrical property data (E) of the utility grid (200) as input,
b) the frequency response system (1) is comparing the obtained electrical property data (E) with respective reference values (Eref) and is then generating a control signal (S) in dependence of the comparison, and
c) the load system (20) reduces its power consumption during a recovery period of the utility grid (200), the recovery period immediately following the inertial response, and
d) the control signal (S) comprises time-dependent setpoints (PSP20) for dynamically controlling the energy consumption of the load system (20) with a predetermined reduced energy consumption in comparison to the energy consumption prior to the inertial response in order to achieve a steady amount of energy supplied to the utility grid (200) as soon as the recovery period has started.

12. A computer program product with a program code, which is stored on a non-transitory machine-readable carrier, for carrying out the method according to the invention or one or more preferred embodiments thereof when the program code is executed on a computer.
